# EUROPÄISCHE PATENTSCHRIFT

(11) **EP 2 516 266 B1**
(45) Veröffentlichungstag und Bekanntmachung des Hinweises auf die Patenterteilung: **29.04.2015**
(21) Anmeldenummer: 10803233.5
(22) Anmeldetag: 21.12.2010
(51) Int. Cl.: B64C 25/50, B64C 25/44, B64C 25/46

(54) **VORRICHTUNG ZUR FÜHRUNGSSTABILISIERUNG EINES FAHRZEUGES**
DEVICE FOR STABILIZING THE GUIDANCE OF A VEHICLE
DISPOSITIF DE STABILISATION DE GUIDAGE D'UN VÉHICULE

(30) Priorität: 23.12.2009 DE 102009060562
(43) Veröffentlichungstag der Anmeldung: 31.10.2012
(73) Patentinhaber: Deutsches Zentrum für Luft- und Raumfahrt e.V., 51147 Köln (DE); Meißner, Ute Marita, 50996 Köln (DE)
(72) Erfinder: MEIßNER, Ute Marita, 50996 Köln (DE); HAHN, Klaus-Uwe, 38176 Wendeburg (DE)
(74) Vertreter: Aisch, Sebastian
(86) Internationale Anmeldenummer: PCT/EP2010/007810
(87) Internationale Veröffentlichungsnummer: WO 2011/079924

(56) Entgegenhaltungen:
- EP-A2- 1 864 878
- WO-A2-2006/096446
- WO-A2-2009/089551
- US-A1- 2006 186 267

## Beschreibung

Die Erfindung betrifft eine Vorrichtung zur Führungsstabilisierung eines Flugzeuges, wobei das Flugzeug mindestens ein Rad, das gegenüber der Längsachse des Fahrzeuges drehbar angeordnet ist, und mit dem mindestens ein Rad zusammenwirkende Lenkmittel aufweist, die zur Führung des Fahrzeuges durch Drehen des mindestens einen Rades eingerichtet sind.

Flugzeuge sind für die Fortbewegung in der Luft konzipiert, das heißt, dass ihr Aufbau hinsichtlich des Mediums Luft optimiert ist. Dennoch weisen auch Flugzeuge konstruktive Mittel auf, mit denen sie sich am Boden fortbewegen können, das sogenannte Fahrwerk. Das Fahrwerk eines Flugzeuges dient dabei dazu, dass sich das Flugzeug auch bei Bodenkontakt sicher und komfortabel fortbewegen kann. Des Weiteren dient das Fahrwerk auch dazu, das Flugzeug zu landen oder zu starten, das heißt, das Flugzeug von oder in sein eigentliches Fortbewegungsmedium zu überführen. Insbesondere reduziert sich der Bodenkontakt über die am Fahrwerk angeordneten Räder auf eine relativ kleine Fläche im Verhältnis zum Gewicht und der Größe des Flugzeuges, so dass aufgrund von beispielsweise schlechten Wetterbedingungen und der daraus folgenden schlechten Eigenschaft der Landebahn ein Sicherheitsrisiko entstehen kann. So ist es beispielsweise denkbar, dass aufgrund von Seitenwind, bei einem Triebwerkausfall oder bei dem einseitigen Versagen des Umkehrschubes auf das Fahrwerk entsprechende Querkräfte wirken, die so groß sind, dass die Räder des Fahrwerkes die Bodenhaftung verlieren. Die Räder fangen dann an zu rutschen und die Manövrierfähigkeit ist beeinträchtigt.

Aber auch bei der sogenannte Seitenwindlandung nach der De-Crab Methode, bei der das Flugzeug die Landebahn mit einem Vorhaltewinkel in Windrichtung anfliegt und somit die Räder des Fahrwerkes nicht in die eigentliche Bewegungsrichtung des Flugzeuges ausgerichtet sind, kann es passieren, dass wenn der Pilot nicht rechtzeitig die Längsachse des Flugzeuges kurz vor dem Aufsetzen in die Bewegungsrichtung steuert, die Räder mit einem entsprechenden Winkel auf der Landebahn aufsetzen und aufgrund der Geschwindigkeit und des Gewichtes des Flugzeuges die Räder anfangen zu rutschen, was die Manövrierfähigkeit und damit die Sicherheit stark beeinträchtigt.

Aus der US 6,722,610 B1 ist beispielsweise ein lenkbares Fahrwerk für Flugzeuge bekannt, das bei einer Seitenwindlandung nach der De-Crab Methode die Räder des Fahrwerkes in Richtung der Bewegungsrichtung des Flugzeuges ausrichtet, so dass das Flugzeug mit dem aufgrund des Seitenwinds notwendigen Vorhaltewinkel sicher auf der Landebahn landen kann, ohne dass der Pilot vorher die Längsachse des Flugzeuges in die Bewegungsrichtung dreht, was als der kritischste Moment bei einer solchen Seitenwindlandung angesehen wird. Eventuelle Querkräfte auf das Fahrwerk des Flugzeuges können so vermieden werden.

Des Weiteren beschreibt das oben genannte Patentdokument ein Verfahren, um die Bremswirkung nach dem Aufsetzen des Flugzeuges zu erhöhen, in dem die drehbar angeordneten Räder des Fahrwerkes in einen solchen Winkel über der Bewegungsrichtung des Fahrzeuges gedreht werden, dass der Gummiabrieb der Räder sich erhöht. Dadurch soll angeblich erreicht werden, dass aufgrund der erhöhten Reibung zwischen Bodenbelag und Reifen das Flugzeug schneller langsamer wird beziehungsweise die Verzögerung erhöht. Allerdings besteht hierbei die Gefahr, dass die für den Bodenkontakt notwendige Haftreibung zwischen Bodenbelag und Reifen in Gleitreibung übergeht, was umgangssprachlich als Rutschen bezeichnet wird und dazu führt, dass das Flugzeug instabil wird und sich nicht mehr vernünftig manövrieren lässt. Darüber hinaus hat die Gleitreibung gegenüber der Haftreibung den Nachteil, dass die Bremswirkung deutlich abnimmt, da ihr Reibungskoeffizient niedriger ist, als der bei der Haftreibung und somit weniger Energie, kinetische Energie, durch die Reibung umgewandelt wird. Darüber hinaus hat dieses Verfahren den erheblichen Nachteil, dass extreme Querkräfte auf das nicht dafür vorgesehene Fahrwerk des Flugzeuges wirken, die im schlimmsten Fall zum Bruch des Fahrwerkes führen können. Dieses Verfahren ist somit letztlich praktisch nicht dazu geeignet, eine sichere und komfortable Landung eines Flugzeuges sicherzustellen.

Aber auch bei Landfahrzeugen, beispielsweise bei Autos, ist der Übergang der Haftreibung in die Gleitreibung zwischen dem Bodenbelag und den Rädern bekannt. Ein solcher Übergang tritt beispielsweise dann auf, wenn ein Fahrzeug, das nicht über ein ABS-System verfügt, stark bremst und die Räder blockieren. Der Bremsweg eines solchen Fahrzeuges ist dabei wesentlich länger, da durch Gleitreibung weniger Energie abgebaut werden kann, als mittels Haftreibung. Aber auch bei starken Lenkeinschlägen kann es passieren, dass die Vorderräder eines Autos die Haftung verlieren und somit nicht in die gewünschte Richtung lenken, sondern anfangen zu rutschen, was dazu führt, dass das Fahrzeug seine vorherige Bewegungsrichtung beibehält.

Aus der WO 2006/096446 A2, der nächsliegende Stand der Technik, ist eine Software zum Ansteuern eines Elektromotors zum Antrieb eines Flugzeuges im Taxiweg bekannt, wobei die Ansteuerung des Elektromotors zum Antrieb des Flugzeuges am Boden so vorgesehen sein kann, dass bei durchdrehenden Rädern die Motorleistung bzw. das Drehmoment zurückgefahren werden kann.

Aus der EP 1 864 878 A2 ist ein Bremskontrollsystem für Flugzeuge bekannt, bei dem eine gewichtete Durchschnittsumdrehungsgeschwindigkeit der Räder für die Bremskontrolle genutzt wird.

Aus der US 2006/0186267 A1 ist ebenfalls ein System zum Abbremsen von Flugzeugen zur Führungsunterstützung bekannt, wobei hier je nach Lenkrichtung die Räder des Fahrwerkes entsprechend abgebremst werden, um eine Lenkunterstützung zu geben.

Aus der WO 2009/089551 A2 ist ebenfalls ein Bremssystem für Flugzeuge bekannt, wobei ein Linearaktor eingesetzt wird.

Es ist daher Aufgabe der vorliegenden Erfindung, ein solches Rutschen von Fahrzeugen, die mittels eines Rad-Boden-Kontaktes geführt werden, im Falle des Auftretens zu beseitigen.

Die Aufgabe wird mit der eingangs genannten Vorrichtung zur Führungsstabilisierung erfindungsgemäß dadurch gelöst, dass die Vorrichtung eine Erkennungseinheit hat, die zum Erkennen eines zumindest teilweisen Übergangs von der Haftreibung zur Gleitreibung zwischen dem mindestens einen Rad- und einen Bodenbelag eingerichtet ist, und die Vorrichtung weiterhin eine Steuereinheit aufweist, die bei Erkennen des Übergangs von der Haftreibung zur Gleitreibung durch die Erkennungseinheit zum Drehen des mindestens einen Rades mittels der Lenkmittel derart eingerichtet ist, dass die Gleitreibung zwischen dem Rad und dem Bodenbelag wieder in Haftreibung übergeht.

Unter dem Drehen des zur Führung des Fahrzeuges vorgesehenen Rades wird im Sinne der vorliegenden Erfindung ein Drehen derart verstanden, dass das Rad gegenüber der Längsachse des Fahrzeuges gedreht oder geschwenkt wird, wobei die Dreh- oder Schwenkachse im Wesentlichen parallel zur Gierbeziehungsweise Hochachse des Fahrzeuges liegt.

Die vorliegende Vorrichtung erkennt dabei mit Hilfe einer entsprechenden Erkennungseinheit den zumindest teilweisen Übergang von der Haftreibung zur Gleitreibung zwischen dem mindestens ein Rad mit dem Bodenbelag, was beispielsweise dann passieren kann, wenn auf das Rad entsprechende Querkräfte wirken, die dazu führen, dass das Rad die Haftung verliert. Das Rad würde somit anfangen zu rutschen. Erkennt die Erkennungseinheit somit ein Rutschen beziehungsweise den Übergang von der Haft- zur Gleitreibung, so wird erfindungsgemäß mittels einer Steuereinheit in die Lenkung derart eingegriffen, dass die Räder gedreht und somit ihre Laufrichtung geändert wird, so dass die Gleitreibung zwischen dem Rad und dem Bodenbelag wieder zurück in die Haftreibung übergeht. Dies ist beispielsweise besonders dann vorteilhaft, wenn die für das Drehen der Räder vorhandenen Lenkmittel mit einem automatischen Lenksystem verbunden sind, um die Führung des Fahrzeuges zu automatisieren.

Der große Vorteil dabei besteht darin, dass ein rutschendes Fahrzeuges automatisch wieder in einen Zustand überführt wird, in dem es eine entsprechende Bodenhaftung aufweist und somit wieder lenkbar gemacht wird. Dadurch kann wesentlich die Sicherheit eines Fahrzeuges bei beispielsweise entsprechend extremen Witterungsbedingungen erhöht werden.

Dabei ist es ganz besonders vorteilhaft, wenn bei einem erkannten Übergang von der Haftreibung zur Gleitreibung zwischen Rad- und Bodenbelag die Steuereinheit die Räder mit Hilfe der Lenkmittel derart dreht, dass die Laufrichtung der Räder in Richtung der Bewegungsrichtung ausgerichtet werden. Die Bewegungsrichtung kann dabei beispielsweise mit Hilfe eines GNSS-Systems ermittelt werden. Die Räder werden somit dann in Rutschrichtung gedreht, so dass sie wieder von der Gleitreibung in die Haftreibung übergehen können und somit das Fahrzeug wieder entsprechende Bodenhaftung aufweist.

Denkbar ist aber auch, dass wenn der Übergang von der Haftreibung zur Gleitreibung erkannt wurde, die Räder solange in die Bewegungsrichtung gedreht werden, bis die Gleitreibung zwischen dem Rad und dem Boden wieder zurück in die Haftreibung übergeht. Dazu ist die Erkennungseinheit des Weiteren erfindungsgemäß zum Erkennen eines Rückübergangs von der Gleitreibung zur Haftreibung zwischen dem Rad und dem Bodenbelag eingerichtet, so dass entsprechend erkannt werden kann, wenn das Rad wieder Bodenhaftung aufweist, um das Fahrzeug führen zu können. Damit kann erreicht werden, dass die Räder nicht wieder bis zur Bewegungsrichtung des Fahrzeuges zurückgedreht werden können, sondern nur soweit, bis zwischen dem Rad und dem Bodenbelag wieder Haftreibung existiert. So kann beispielsweise beim Lenken der Räder in eine Richtung erreicht werden, dass zumindest ein Teil der Führungsrichtung beibehalten wird und die Räder sich nicht wieder exakt in Bewegungsrichtung ausrichten.

Beim Erkennen des Übergangs von der Haftreibung zur Gleitreibung beziehungsweise beim Erkennen des Rückübergangs von der Gleitreibung in die Haftreibung ist es besonders vorteilhaft, wenn dieses Erkennen des Übergangs anhand eines Schwellwertes ermittelt wird. Somit kann verhindert werden, dass beispielsweise leichtes Rutschen oder sogar Schlupf fälschlicherweise als Übergang von der Haft- zur Gleitreibung erkannt wird.

Der Übergang von der Haft- zur Gleitreibung beziehungsweise der Rückübergang von der Gleit- zur Haftreibung kann dabei vorteilhafterweise derart ermittelt werden, dass an dem Rad ein Sensor zum Messen der Umdrehungsgeschwindigkeit angeordnet ist, wobei ein Übergang dann erkannt wird, wenn eine mit der Umdrehungszahl des Rades korrelierende theoretische Fahrzeuggeschwindigkeit von der tatsächlichen Fahrzeuggeschwindigkeit, die beispielsweise ebenfalls mit einem GNSS-System ermittelt werden kann, abweicht. Die Umdrehungszahl des Rades korreliert mit der Fahrzeuggeschwindigkeit, wobei ein Übergang von der Haft- zur Gleitreibung dann erkannt wird, wenn die sich aus der Umdrehungszahl ergebende theoretische Fahrzeuggeschwindigkeit kleiner ist als die tatsächliche Fahrzeuggeschwindigkeit. Ist die theoretische Geschwindigkeit, die sich aus der Umdrehungszahl des Rades ergibt, 0, so blockiert das Rad.

Vorteilhafterweise kann der Übergang von der Haft- zur Gleitreibung beziehungsweise der Rückübergang auch in Abhängigkeit des Lenkwinkels gegenüber der Längsachse des Fahrzeuges sowie der tatsächlichen Bewegungsrichtung ermittelt werden. Weicht die tatsächliche Bewegungsrichtung des Fahrzeuges von der theoretischen Bewegungsrichtung, die sich aus dem Lenkwinkel ergeben müsste, ab, so kann darauf geschlossen werden, dass das Rad beziehungsweise die Räder die Bodenhaftung verlieren und Rutschen, so dass zwischen Bodenbelag und Rad eine Gleitreibung angenommen werden kann.

Die vorliegende Erfindung ist dabei insbesondere für Flugzeuge geeignet, die über ein lenkbares Fahrwerk verfügen und nach dem Landen beziehungsweise Aufsetzen des Flugzeuges auf der Landebahn ihr Fahrwerk in eine bestimmte Richtung drehen, um das Flugzeug während der Ausrollphase zu lenken. Bei den hohen Geschwindigkeiten sowie schlechten Bodenbelag kann es dabei dazu kommen, dass die Räder die Haftung verlieren und anfangen zu rutschen, so dass die Führungsstabilität des Flugzeuges eingeschränkt ist. Durch Rückstellen der Räder in Rutschrichtung erhalten die Räder wieder Haftung, so dass auch die Bremsen effektiver wirken.

Die Erfindung wird anhand der beigefügten Zeichnung beispielhaft näher erläutert.

Es zeigen:
- Figur 1: - schematische Darstellung eines gelandeten Flugzeuges mit rutschenden Reifen;
- Figur 2: - schematische Darstellung eines gelandeten Flugzeuges mit entsprechender Bodenhaftung;
- Figur 3: - schematische Darstellung der Vorrichtung.

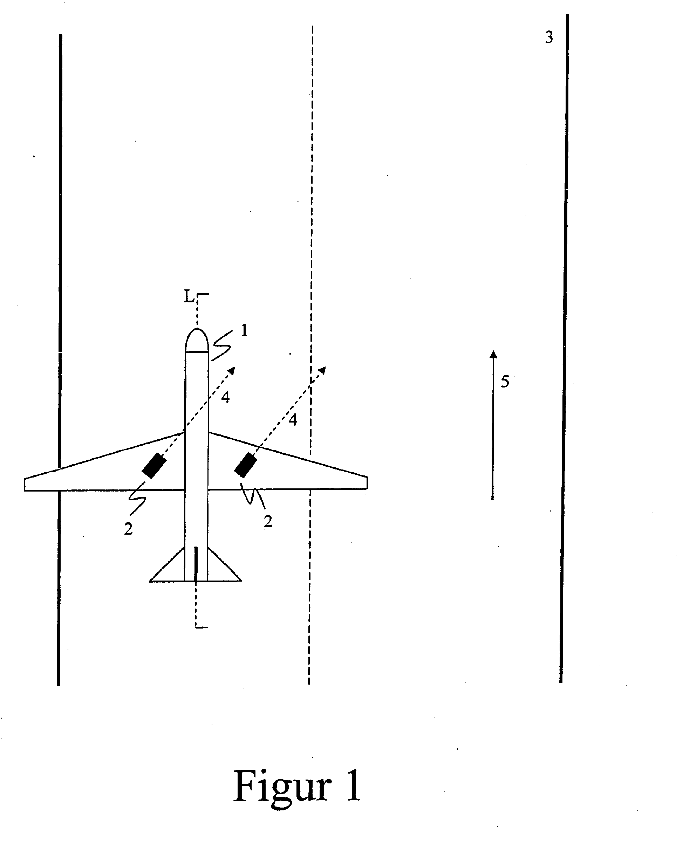

Figur 1 zeigt schematisch ein gelandetes Flugzeug 1 dessen Fahrwerk (Lenkmittel) und somit auch die Räder 2 des Hauptfahrwerkes in Richtung der Mitte der Landebahn 3 gedreht wurden, um das Flugzeug 1 kurz nach dem Aufsetzen in diese Richtung zu führen. Die Laufrichtung der Räder 2 ist dabei mit den gestrichelten Pfeilen 4 dargestellt und weicht von der eigentlichen Bewegungsrichtung 5 des Flugzeuges 1 ab.

In dem schematisch dargestellten Beispiel der Figur 1 ist die Haftreibung zwischen den Rädern 2 und der Landebahn 3 in Gleitreibung übergegangen, so dass das Flugzeug sich weiterhin in seine primäre Bewegungsrichtung 5, die parallel zur Längsachse des Flugzeuges 1 ist, bewegt. Mit anderen Worten, trotz der gedrehten Räder 2 in Richtung Landebahnmitte erfolgt keine Führung des Fahrzeuges 1 in diese Richtung, da die Räder 2 keine Haftung aufweisen.

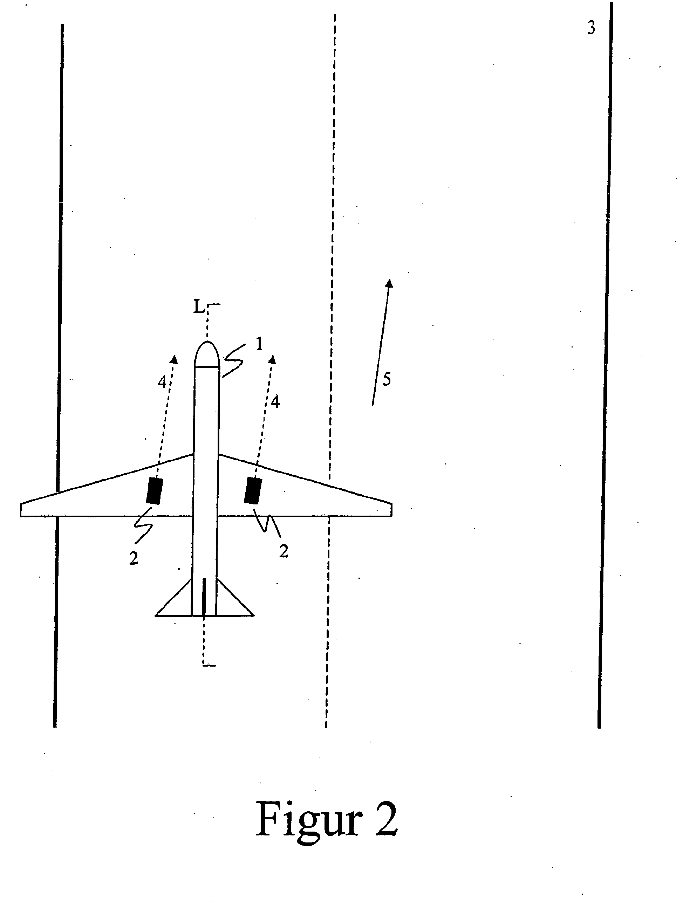

Die Vorrichtung erkennt nun mit Hilfe der Erkennungseinheit diesen Zustand, das heißt den Übergang von der Haft- zur Gleitreibung, und leitet entsprechende Maßnahmen ein. Mit der erfindungsgemäßen Steuereinheit wird dann das Fahrwerk mit seinen Rädern 2 derart gedreht, dass die Laufrichtung 4 der Räder 2 in die Bewegungsrichtung gedreht werden, bis die Gleitreibung zwischen den Rädern 2 und der Landebahn 3 wieder in Haftreibung übergehen und das Flugzeug 1 wieder entsprechende Haftung aufweist. Dies ist in Figur 2 schematisch dargestellt.

Die Räder 2, wie sie in Figur 2 dargestellt sind, sind dabei soweit gedreht worden, bis die Gleitreibung wieder zurück in die Haftreibung übergegangen ist. Dabei wurden die Räder jedoch nicht soweit gedreht, bis sie parallel zur Längsachse des Flugzeuges ausgerichtet sind, sondern nur soweit, bis wieder Haftreibung vorhanden ist. Das Flugzeug 1 beginnt dann sofort mit der Führung in die dann vorhandene Richtung 5, so dass das Flugzeug stabilisiert ist und sicher gelenkt und abgebremst werden kann.

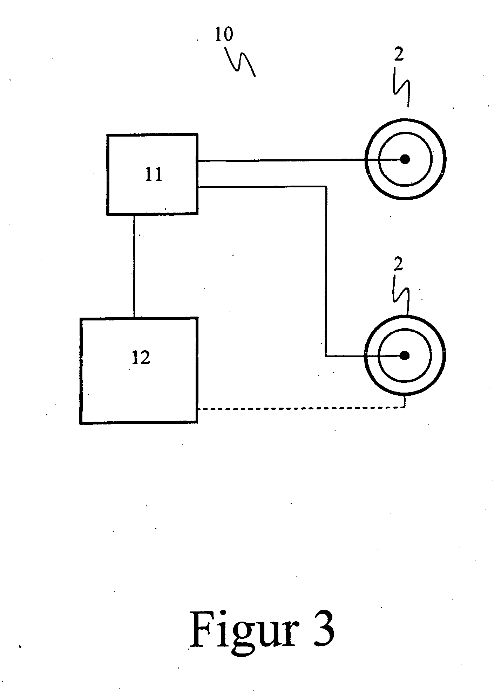

Figur 3 zeigt die schematische Darstellung der Vorrichtung 10. Die Vorrichtung weist zwei Räder 2 auf, um ein nicht dargestelltes Fahrzeug in eine bestimmte Richtung zu führen, beziehungsweise um die sogenannte Querführung des Fahrzeuges sicherzustellen. Die Räder 2 können dabei gegenüber der Längsachse des Fahrzeuges gedreht oder geschwenkt werden, was mittels entsprechender nicht dargestellter und aus dem Stand der Technik hinreichend bekannter Lenkmittel geschieht.

Die Vorrichtung 10 weist des Weiteren eine Erkennungseinheit 12 auf, die zum Erkennen eines Übergangs von der Haftreibung zur Gleitreibung zwischen den Rädern 2 und mit diesen Rädern 2 in Kontakt stehenden Bodenbelag 3 erkennt. Dieses Erkennen kann beispielsweise mit Hilfe eines Umdrehungssensors geschehen, der kontinuierlich die Umdrehungszahl der Räder 2 misst und bei Abweichung zwischen der tatsächlichen Fahrzeuggeschwindigkeit und einer mit der Umdrehungszahl der Räder 2 korrelierenden theoretischen Fahrzeuggeschwindigkeit auf einen Übergang von der Haft- zur Gleitreibung und umgekehrt schließt.

Die Erkennungseinheit 12 ist des Weiteren mit einer Steuereinheit 11 verbunden, die zum Drehen der Räder mit Hilfe der Lenkmittel eingerichtet ist. Erkennt die Erkennungseinheit 12 einen Übergang von der Haft- zur Gleitreibung, also somit ein Rutschen der Räder 2, so teilt sie dies der Steuereinheit 11 mit, so dass die Steuereinheit 11 nunmehr die Räder 2 beispielsweise in Richtung der Längsachse des Fahrzeuges dreht und somit die Räder 2 wieder an Bodenhaftung gewinnen können, das heißt das ein Übergang von der Gleitreibung zur Haftreibung stattfinden kann.

Damit kann die aufgrund des Rutschens der Räder verloren gegangene Führungsstabilität des Fahrzeuges wieder hergestellt werden. Dies kann letztendlich zur Sicherheit im Flugverkehr beitragen.

## Patentansprüche

1. Vorrichtung (10) zur Führungsstabilisierung eines Flugzeuges (1), wobei das Flugzeug mindestens ein Rad (2) hat, das gegenüber der Längsachse (L) des Flugzeuges (1) drehbar angeordnet ist, wobei die Drehachse im Wesentlich parallel zur Gierachse des Fahrzeuges liegt, und mit dem mindestens einen Rad (2) zusammenwirkende Lenkmittel aufweist, die zur Führung des Fahrzeuges (1) durch Drehen des mindestens ein Rades (2) eingerichtet sind, **dadurch gekennzeichnet, dass** die Vorrichtung (10) eine Erkennungseinheit (12) hat, die zum Erkennen eines zumindest teilweisen Übergangs von der Haftreibung zur Gleitreibung zwischen dem mindestens einen Rad (2) und einem Bodenbelag (3) eingerichtet ist, und die Vorrichtung weiterhin eine Steuereinheit (11) aufweist, die bei Erkennen des Übergangs von der Haftreibung zur Gleitreibung durch die Erkennungseinheit (12) zum Drehen des mindestens einen Rades (2) mittels der Lenkmittel derart eingerichtet ist, dass die Gleitreibung zwischen dem Rad (2) und dem Bodenbelag (3) wieder in Haftreibung übergeht.

2. Vorrichtung (10) nach Anspruch 1, **dadurch gekennzeichnet, dass** die Steuereinheit (11) bei Erkennung des Übergangs von der Haftreibung zur Gleitreibung zum Drehen des mindestens einen Rades (2) in Abhängigkeit der Bewegungsrichtung (5) des Flugzeuges (1) derart eingerichtet ist, dass die Laufrichtung (4) des mindestens einen Rades (2) in Richtung der Bewegungsrichtung (5) des Flugzeuges (1) gedreht wird.

3. Vorrichtung (10) nach Anspruch 1, **dadurch gekennzeichnet, dass** die Erkennungseinheit (12) weiterhin auch zum Erkennen eines Rückübergangs von der Gleitreibung zur Haftreibung zwischen dem mindestens einen Rad (2) und dem Bodenbelag (3) eingerichtet ist, wobei die Steuereinheit (11) zum Drehen des Rades (2) derart eingerichtet ist, dass das mindestens eine Rad (2) soweit gedreht wird, bis der Rückübergang von der Gleitreibung zur Haftreibung von der Erkennungseinheit (12) erkannt wird.

4. Vorrichtung (10) nach einem der vorhergehenden Ansprüche, **dadurch gekennzeichnet, dass** die Erkennungseinheit (12) zum Erkennen des Übergangs von der Haftreibung zur Gleitreibung und/oder des Rückübergangs von der Gleitreibung zur Haftreibung in Abhängigkeit eines Schwellwertes eingerichtet ist.

5. Vorrichtung (10) nach einem der vorhergehenden Ansprüche, **dadurch gekennzeichnet, dass** die Erkennungseinheit (12) mit einem an dem mindestens einem Rad (2) angeordneten Sensor zum Messen der Umdrehungsgeschwindigkeit verbunden ist und zum Erkennen des Übergangs von der Haftreibung zur Gleitreibung und/oder des Rückübergangs von der Gleitreibung zur Haftreibung in Abhängigkeit einer Abweichung zwischen einer mit der Umdrehungsgeschwindigkeit des Rades (2) korrelierenden theoretischen Flugzeuggeschwindigkeit und der tatsächlichen Flugzeuggeschwindigkeit eingerichtet ist.

6. Vorrichtung (10) nach einem der vorhergehenden Ansprüche, **dadurch gekennzeichnet, dass** die Erkennungseinheit (12) zum Ermitteln des Lenkwinkels des mindestens einen Rades (2) und zum Erkennen des Überganges von der Haftreibung zur Gleitreibung und/oder des Rückübergangs von der Gleitreibung zur Haftreibung in Abhängigkeit einer Abweichung zwischen dem ermittelten Lenkwinkel und der tatsächlichen Bewegungsrichtung (5) des Flugzeuges eingerichtet ist.

## Claims

1. Device (10) for stabilizing the guidance of an aircraft (1), the aircraft having at least one wheel (2) which is arranged in such a way that it can be turned relative to the longitudinal axis (L) of the aircraft (1), whereby the turning axis being substantially parallel to the yaw axis of the vehicle, and steering means that interact with the at least one wheel (2) and are designed to guide the vehicle (1) by turning the at least one wheel (2), **characterized in that** the device (10) has a detecting unit (12), which is designed to detect an at least partial transition from static friction to dynamic friction between the at least one wheel (2) and a ground covering (3), and the device furthermore has a control unit (11), which, when the detecting unit (12) detects the transition from static friction to dynamic friction, is designed to turn the at least one wheel (2) by means of the steering means in such a way that the dynamic friction between the wheel (2) and the ground covering (3) changes back to static friction.

2. Device (10) according to Claim 1, **characterized in that** the control unit (11) is designed to turn the at least one wheel (2) according to the direction of motion (5) of the aircraft (1) in such a way, when the transition from static friction to dynamic friction is detected, that the direction of running (4) of the at least one wheel (2) is turned in the direction of motion (5) of the aircraft (1).

3. Device (10) according to Claim 1, **characterized in that** the detecting unit (12) is furthermore also designed to detect a reverse transition from dynamic friction to static friction between the at least one wheel (2) and the ground covering (3), the control unit (11) being designed to turn the wheel (2) in such a way that the at least one wheel (2) is turned until the reverse transition from dynamic friction to static friction is detected by the detecting unit (12).

4. Device (10) according to one of the preceding claims, **characterized in that** the detecting unit (12) is designed to detect the transition from static friction to dynamic friction and/or the reverse transition from dynamic friction to static friction according to a threshold value.

5. Device (10) according to one of the preceding claims, **characterized in that** the detecting unit (12) is connected to a sensor for measuring the speed of rotation arranged on the at least one wheel (2) and is designed to detect the transition from static friction to dynamic friction and/or the reverse transition from dynamic friction to static friction according to a deviation between a theoretical aircraft speed correlated with the speed of rotation of the wheel (2) and the actual aircraft speed.

6. Device (10) according to one of the preceding claims, **characterized in that** the detecting unit (12) is designed to detect the steering angle of the at least one wheel (2) and to detect the transition from static friction to dynamic friction and/or the reverse transition from dynamic friction to static friction according to a deviation between the steering angle determined and the actual direction of motion (5) of the aircraft.

## Revendications

1. Dispositif (10) pour la stabilisation de guidage d'un avion (1), dans lequel l'avion comporte au moins une roue (2), qui est disposée de façon pivotante par rapport à l'axe longitudinal (L) de l'avion (1), dans lequel l'axe de pivotement est essentiellement parallèle à l'axe de lacet du véhicule, et présente des moyens de direction coopérant avec ladite au moins une roue (2), qui sont conçus pour le guidage du véhicule (1) par pivotement de ladite au moins une roue (2), **caractérisé en ce que** le dispositif (10) comporte une unité de reconnaissance (12), qui est conçue pour reconnaître un passage au moins partiel du frottement par adhérence au frottement de glissement entre ladite au moins une roue (2) et un revêtement de sol (3), et le dispositif présente en outre une unité de commande (11), qui est conçue pour faire pivoter ladite au moins une roue (2) au moyen des moyens de direction, lors de la reconnaissance du passage du frottement par adhérence au frottement de glissement par l'unité de reconnaissance (12), de telle manière que le frottement de glissement entre la roue (2) et le revêtement de sol (3) redevienne un frottement par adhérence.

2. Dispositif (10) selon la revendication 1, **caractérisé en ce que** l'unité de commande (11) est conçue de façon à faire pivoter ladite au moins une roue (2) en fonction de la direction du mouvement (5) de l'avion (1), lors de la reconnaissance du passage du frottement par adhérence au frottement de glissement, de telle manière que la direction de roulement (4) de ladite au moins une roue (2) pivote dans la direction du mouvement (5) de l'avion (1).

3. Dispositif (10) selon la revendication 1, **caractérisé en ce que** l'unité de reconnaissance (12) est en outre conçue également pour reconnaître un passage inverse du frottement de glissement au frottement par adhérence entre ladite au moins une roue (2) et le revêtement de sol (3), dans lequel l'unité de commande (11) est conçue de façon à faire pivoter la roue (2) de telle manière que ladite au moins une roue (2) pivote jusqu'à ce que le passage inverse du frottement de glissement au frottement par adhérence soit reconnu par l'unité de reconnaissance (12).

4. Dispositif (10) selon l'une quelconque des revendications précédentes, **caractérisé en ce que** l'unité de reconnaissance (12) est conçue de façon à reconnaître le passage du frottement par adhérence au frottement de glissement et/ou le passage inverse du frottement de glissement au frottement par adhérence en fonction d'une valeur de seuil.

5. Dispositif (10) selon l'une quelconque des revendications précédentes, **caractérisé en ce que** l'unité de reconnaissance (12) est reliée à un capteur disposé sur ladite au moins une roue (2) afin de mesurer la vitesse de rotation et de reconnaître le passage du frottement par adhérence au frottement de glissement et/ou du passage inverse du frottement de glissement au frottement par adhérence en fonction d'un écart entre une vitesse théorique de l'avion en corrélation avec la vitesse de rotation de la roue (2) et la vitesse effective de l'avion.

6. Dispositif (10) selon l'une quelconque des revendications précédentes, **caractérisé en ce que** l'unité de reconnaissance (12) est conçue de façon à déterminer l'angle de direction de ladite au moins une roue (2) et à reconnaître le passage du frottement par adhérence au frottement de glissement et/ou le passage inverse du frottement de glissement au frottement par adhérence en fonction d'un écart entre l'angle de direction déterminé et la direction de mouvement effective (5) de l'avion.
